# EUROPEAN PATENT APPLICATION

(11) **EP 1 143 727 A1**
(43) Date of publication of application: **10.10.2001**
(21) Application number: 00810273.3
(22) Date of filing: 31.03.2000
(51) Int. Cl.: H04N 7/16

(54) **Method for managing subscriber credits in a PAYTV system**

(71) Applicant: Nagravision SA, 1033 Cheseaux-sur-Lausanne (CH)
(72) Inventor: Sasselli, Marco, 1803 Chardonne (CH); Osen, Karl, 1282 Dardagny (CH)
(74) Representative: Wenger, Joel-Théophile

(57) **Abstract**

A method for providing Pay TV services to subscribers offers to the services provider enhanced flexibility in billing procedures and the marketing advantage of granting an initial credit to each subscriber upon his subscription.

## Description

The present invention concerns the technical field of distributed systems, and particularly Pay-TV systems where a services provider proposes to potential subscribers an offering based primarily on the possibility that is given to the subscriber to attend audiovisual events such as an important sports competition, a science fiction movie, a sitcom, a cartoon or similar shows.

The latest developments in Pay-TV systems show that the fact of gaining the confidence of a subscriber, generally a household, resulting in the installation of an IRD (Integrated Receiver Decoder, also called Set Top Box because it comes usually on top of the television set) in the subscriber's premises, represents enormous business opportunities mainly because a return path is provided from the household to the provider, generally in the shape of a phone line allowing automatic calls. If the subscriber count is large enough, the above-described implementation allows the subscriber to make important economies of scale in the marketing process while increasing the customer satisfaction by an attractive offering.

The economical mechanism consists for the provider in recording electronically the viewing decisions of the subscribers, and their corresponding cost, and to send the subscriber a bill covering the cost of the events he has chosen to book and to actually view on the subscriber's television set. US Patent 4,484,217 to Block et al. describes such a system.

However, a first drawback of such a system is that the data are collected according to a fixed time base, corresponding e.g. to a fixed billing period. A second drawback of Block's system is that payment is required in advance for access to the events proposed. This precondition can be a deterrent for the would-be subscriber, leading to a negative decision, thus entailing loss of business for the provider. There is a need for a more flexible system in the sense that the subscriber is billed for what he has actually watched. More flexibility is also needed to allow the provider to set a low limit of credit to its subscribers, in order to prevent a loss due to defaults of payment following intensive consumption by some subscribers. At the same time, the system should allow reliable clients to consume televisual events as much as they want. Apparently the second condition is contradictory with the first one. The present invention provides a solution that fits both above-mentioned conditions.

In the present invention, the choice of the date of said data collection, as well as the actual sending of a bill, is a function of a number of criteria. For instance, if a subscriber with a very low consumption of events, it might not be worth it to send him a bill every month; a lower billing frequency may be enough. On the other hand, if the consumption is very high, it might be worth alerting the housewife that e.g. her children are watching many expensive Tom & Jerry cartoons while she is away. This can be done by sending regularly a warning message on the TV set, concerning the amount purchased since the last bill, or more bluntly, simply by disabling temporarily the system's capabilities until the next bill is received, usually by mail, and processed within the household. The low credit limit according to the invention is quickly reached in the case of a large consumption of events on the IRD. Approaching near the given credit limit entails an automatic call to the provider's system management, in order to take necessary steps to allow the consumer to continue purchasing events.

Concerning the second drawback, the present invention provides an initial credit limit being offered to the subscriber, as opposed to the prepaid system of Block.

In a particular embodiment of the invention, the IRD in the subscriber's premises is fitted with a Smart Card reader. As explained in PCT/EP93/02273, called hereafter the S-RDB invention, the smart card contains a Data Base with all the data relevant to the subscriber. More specifically, in the Data Base of the Smart Card, the credit record according to this embodiment of the invention contains at least four items:
- a date, which traces a modification of the credit
- a credit counter
- a debit counter
- a threshold value.

The date is changed, i.e. updated, primarily when an operation as will now be described takes place with the Subscriber Management System.

The Subscriber Management System or SMS is on the service provider's central site, and is in charge of the administration and billing of the subscribers. An example of a SMS is described in the Swiss Patent Application No. 2000 0143/00. Typically, a new amount of money is considered by the SMS.

The modem in the IRD or decoder allows the updating of the data in the Smart Card in response to the information coming from the SMS.

For instance, if in the prior art we have e.g. a value of 100 monetary units of purchases that were made, and there is, say, 2 monetary units left. In the prior art, the SMS would consider the payment of an extra 100 monetary units in increasing the credit by 100 units. In this embodiment of the invention, it does not exactly work that way. The first 100 units are considered as a credit limit, not a true "wallet" - "wallet" is to be understood as if the last-mile consumer (i.e. the subscriber, let's call him the client) had this amount in cash, in a wallet he carries in his pocket.

A consumption of events, increasing the debit counter, that approaches the credit limit entails at one moment a call, or callback, being made by the IRD to a centralized subsystem which is the Call Collector. The services provider then verifies the account, calculates the consumption and, according to the client's profile, the special marketing actions being currently promoted, the billing policy, chooses (or not) to send an invoice to the client. The action according to the above-listed criteria can be easily programmed. It will be understood that according to the invention, each different service provider may use a different credit limit for a given particular client.

The way the threshold (which will hereafter be called T, i.e. the fifth item of the Smart Card Data Base) functions is the following. If the difference Credit minus Debit (i.e. the remaining value) becomes smaller than T, then an automatic call is placed by the IRD. Typically, T is set at a value that exceeds the most expensive item that is proposed to the client in the provider's offering. This way, an adverse marketing effect is avoided.

An automatic call or callback can be made for various reasons, which will be detailed thereafter:
- regular callback;
- immediate callback;
- credit minus debit is less than T,
- a future consumption, ordered in advance, can be a further reason;
- a full Smart Card memory due to a high event consumption.

The following is a brief description of the buying operation, intimately involving what is generally called the Electronic Program Guide or EPG. Electronic program guides are found particularly useful when the television offering is very rich. It can become so rich that the weekly television magazine, of the type that is often inserted in Saturday newspapers for the following week, is getting too heavy and cumbersome to be of practical use by the subscriber who wants to find his favorite programs at the best price. Examples of electronic program guides are described in e.g. US Patents No. 5,550,576 to Klostermann, No.5,532,754 to Young, or No.5,508,815 to Levine

The existence and availability of an EPG results in a data stream whose features are described by the DVB (Digital Video Broadcasting, c/o European Broadcasting Union, address: Ancienne Route 17A, CH - Grand Saconnex) standard. In the EPG, there are what can be called "private" descriptors that are part of the way the subscriber can buy an event.

Among them, there is:
- the price, in clear so that the client understands what he chooses to spend before actually buying
- information (on the event)
- means to send at least an EMM (Entitlement Management Message) that is linked to the event. In this sense, we can say that at least an EMM is contained in the EPG.

In this scheme, if a client, siting in front of his TV set, selects an event that is appealing to him or her, the effect of said selection is not immediate. In fact, he or she can purchase the event one week or more before the viewing of it takes place. In the EMM, the following signals are present:
- price information
- a string describing the event; it's a short string of generally 20 bytes only. Normally only the event title can fit in that string.
- the subscription itself.

The subscription can be created from the SMS. The operation made is a comparison between : credit on one side, and price plus debit on the other side. If the credit is superior, the price is added to the debit (never to the credit in this case).

The record created in the Smart Card comprises:
- a flag indicating the impulsive nature of the purchase, i.e. that we have an impulse purchase by the viewer
- the price, e.g. 3,99 monetary units, is also put in the record
- the date, e.g. Feb 22, 2000

After that, the client may watch, or not, the event he bought. If he does, it creates a "watched" flag that is then part of the callback information in the next Call Collect step performed on the service provider's side.

The Call Collect subsystem can then create a new flag "call collected".

No deletion in the Smart Card can be performed before the previously described operations have been duly processed in the client's account with the service provider.

The possibility of (a) the non-watch and (b) the partial watch of an event will now be described.

As was seen, there are two ways of managing records:
- the SMS adds some credit, with an upper limit over 65,000 monetary units;
- The other is: just performing accounting operations on what was found on the CallCollector: for instance, 15 events @ 3,99 units, 10 events @ 4,9 totaling 89 units of movies.

The general principle is that in the system the proof exists that an event was watched during at least xyz minutes (xyz can be zero if the event was "not watched"). This way, the decision on whether or not the client gets a refund if the event was actually not watched, or only partly watched, depends entirely on the service provider.

The system according to the preferred embodiment of the invention does have a mechanism that deletes conditionally the record, the conditions being:
- if it is not an impulse purchase, there is no problem with said deletion;
- if it is an IPPV (IPPV means Impulsive Per View) purchase, the Smart Card receives the EMM and deletion is conditional on the Call Collect operation being effective. If it is not effective, the Smart Card makes a test on the "watched" code. If the value of said code is "not watched", the Smart Card processor performs an addition of the corresponding amount to the credit. In a different embodiment of the invention adapted to different cases, it is a better solution to decrease the debit.

Using or not this mechanism is part of the service provider's policy vis-à-vis his clients. Of course, one can imagine an SMS request that would be specifically designed to kill one particular subscription, because as it is impulsive, and more specifically made through the EPG, the SMS normally does not receive any information on said subscription being dead.

But with a customer base counting millions of clients, the above option could hardly be manageable.

As a result, the available data in the billing process are for instance: n items @ 3,99 units, p items @ 6,99 units, etc, with a separate category of "bought but not watched" item for an amount of q units. It is up to the service provider to make use or not of the q units in the bill that will contain at least 3,99 n + 6,99 p units

In prior art systems, the intent was basically to allow only the purchase of full events. The invention additionally provides the advantage of allowing clients of the service provider to buy what is called "per time slice" prestations. In this system, each EMM sent (the cryptoperiod, i.e. the time elapsed between two EMMs, is between 5 and 10 seconds) costs the client some ten thousands of a monetary unit. Counting the EMMs this way constitutes a proof that the client watched the event at least for the corresponding time.

One reason why that system was hard to install is that too much strain is put on the Smart Card's EEPROM (EEPROM means Electrically Erasable Programmable Read Only Memory) if it is implemented, i.e. there were risks of early failure if the records were modified so frequently.

The case of a subscriber not plugging in the phone line (for instance frequent travelers, like truck drivers, taking with them their IRD in order not to miss any of their favorite television events, and which have a problem to plug in the phone en route) will now be examined in more detail.

Normally, an initial credit value of e.g. 100 monetary units is set for every client at the beginning of its subscription. At one moment, if the phone fails to be plugged, it becomes impossible to view events because of the absence of the previously described Call Back operations. But if consumption is very low, it is theoretically possible for the client to "steal" (i.e., view for free) 100 monetary units' worth of events. In prior art, this was or would have been considered a financial drawback. Practically, the strong business perspectives opened to the service provider for additionally selling non-TV items via this convenient marketing channel, already installed in many households with a very good tamper-proof safety lodged in the Smart Card, are worth much more than said 100 monetary units.

Every time there is a callback, the Call Collector receives:
- the content of the credit record
- all information on the subscription (impulsive or not, call collected or not) that is present on the card.

The Set Balance operation will now be described in more detail. It consists in putting :
- in the Debit, a zero value
- in the Credit, a value equal to the previous difference between credit and debit.

After that, the billing process starts.

As was explained, some impulsive records can have a "not watched" status and it is up to the service provider to act according to his policy vis-à-vis the subscribers, but one can easily imagine that the clients' satisfaction would be adversely affected if the service provider chooses to bill for the unwatched events. This would be the case if billing is based on subscriptions, not on the debits.

Each subscription contains some different flags. One says: "I am an impulsive purchase (or not) ", another one says: "The event was watched (or not watched)", a third one says "was call-collected (or not)".

So when the information goes to the SMS, the records of the SMS contain details of what was watched or not by the client .

In a particular embodiment of the invention, a callback subset of the Smart Card contains three fields. One contains a phone number, which is mandatory if you want to make a phone call and if there are several possibilities. A second one contains the date and time, with a granularity of four seconds, of the next regular callback that is to be placed. A third one is used to initiate the so-called immediate callbacks, i.e. the callbacks that are triggered by consumption in addition to, or in replacement for, the regular callbacks. The callback subset is reloaded every time there is a callback The Call Collector subsystem will calculate the next time a regular callback is due, in case of an immediate callback.

For instance, if the regular callback is in two days, and if there is an immediate call today because the credit limit is reached, then the Call Collector subsystem will cancel the one that is due in two days, and set next the regular one in e.g. seven days.

In a particular embodiment of the invention, a parental control protects the children of the household from seing televisual events of a sensitive type, as described in e.g. US Patent No. 4,225,884. This feature can incorporate not only an age-based authorization system, the children each having a secret access code allowing the system to trace the age of each of the code owners, but also a personalized credit of view allowances, maintained by the parents, and designed to prevent excessive televisual consumption.

In another embodiment, the credit counter comprises another information, i.e. the credit limit. This limit is set at the initialization of the set-top box. The credit counter is therefore neither reinitialized nor decremented but incremented of the credit limit as soon as the remaining value is less than the threshold value. When the credit counter approach to a predetermined value (e.g. the overflow value), it is possible to subtract to both the credit and debit counters the same amount.

## Claims

1. Method for providing Pay-TV services, comprising the steps of:
- making available an offering to at least a subscriber location, the potential subscriber being enabled to select and purchase events among said offering made by a services provider,
- attaching a price information to each of the events offered by the provider,
- allocating a credit limit to the subscriber upon initial subscription,
- storing information on services purchases made by the subscriber, such storing including the step of increasing a debit counter thus defining a remaining value,
- initiating a communication for conveying said information to the service provider by an electronic return channel at a time defined by the remaining value or timing criteria,
- issuing a bill to the subscriber at a time of billing, wherein the time of billing is made dependent on a plurality of conditions involving in particular the subscriber's rate of consumption of TV services.

2. A method according to claim 1, wherein the communication is initiated when the remaining value is lower than a threshold value.

3. A method according to claim 2, wherein the threshold value is defined so as to allow the subscriber to purchase the most expensive event.

4. A method according to claim 3, wherein the debit counter is reset when a successful communication with the service provider has taken place.

5. A method according to claim 3, wherein at the initial subscription a credit counter is set to the credit limit and, when a successful communication with the service provider has taken place, the credit counter is incremented by the credit limit if the remaining value has reached the threshold value.

6. A method according to claim 1, wherein an electronic program guide displayed on his TV set helps the subscriber make his selections, and the service provider has the capacity of not billing the subscriber for the events he has selected but not watched, and of only billing partly the events that were not watched in full.

7. A method according to claim 1, wherein it further comprises a parental control on the events the children of the household may watch or not within the offering, said parental control featuring a credit limit per viewer.
